# EUROPÄISCHE PATENTSCHRIFT

(11) **EP 2 010 977 B1**
(45) Veröffentlichungstag und Bekanntmachung des Hinweises auf die Patenterteilung: **17.03.2010**
(21) Anmeldenummer: 07723795.6
(22) Anmeldetag: 30.03.2007
(51) Int. Cl.: G05B 19/23

(54) **VERFAHREN UND VORRICHTUNG ZUM POSITIONSGENAUEN TRIGGERN EINES WAHLWEISE AKTIVIERBAREN MASCHINENTEILS**
METHOD AND DEVICE FOR THE POSITIONALLY ACCURATE TRIGGERING OF AN OPTIONALLY ACTIVATED MACHINE PART
PROCEDE ET DISPOSITIF DE DECLENCHEMENT, EN POSITION PRECISE, D'UN ELEMENT DE MACHINE ACTIVABLE A CHOIX

(30) Priorität: 27.04.2006 DE 102006020680
(43) Veröffentlichungstag der Anmeldung: 07.01.2009
(73) Patentinhaber: Carl Zeiss Industrielle Messtechnik GmbH, 73447 Oberkochen (DE)
(72) Erfinder: SCHOERG, Friedrich, 89551 Koenigsbronn (DE); STUMPP, Ernst, 89551 Koenigsbronn (DE); GRUPP, Guenter, 89558 Boehmenkirch (DE); RUCK, Otto, 73479 Ellwangen-Pfahlheim (DE)
(74) Vertreter: Duhme, Torsten
(86) Internationale Anmeldenummer: PCT/EP2007/002853
(87) Internationale Veröffentlichungsnummer: WO 2007/124828

(56) Entgegenhaltungen:
- WO-A-00/47361
- WO-A-2006/038017
- DE-A1- 10 149 828
- US-A- 4 081 732
- US-A- 5 341 157
- US-A1- 2005 035 101

## Beschreibung

Die vorliegende Erfindung betrifft ein Verfahren und eine Vorrichtung zum positionsgenauen Triggern eines wahlweise aktivierbaren Maschinenteils, das entlang von zumindest einer Bewegungsachse relativ zu einem Werkstück verfahren wird, um eine positionsgenaue Bearbeitung des Werkstücks an voneinander beabstandeten Bearbeitungspositionen zu ermöglichen. Ein solches Verfahren und eine solche Vorrichtung werden beispielsweise für die Herstellung von Flüssigkristallanzeigen (LCDs) oder für die Herstellung von Solarzellen benötigt. Die vorliegende Erfindung ist jedoch nicht auf diese Anwendungsbeispiele beschränkt, auch wenn es sich um bevorzugte Anwendungsfälle handelt.

Als nächstkommender Stand der Technik ist das Dokument US 4,081,732 bekannt. Es offenbart ein Verfahren und eine Vorrichtung zur automatischen Positionierung eines Werkstücktisches.

Ein bekanntes Verfahren zum positionsgenauen Triggern eines verfahrbaren Maschinenteils ist in DE 101 49 828 A1 beschrieben. In diesem Fall ist das Maschinenteil ein Gravierstichel zum Gravieren eines Druckzylinders. Der Gravierstichel wird relativ zu dem Druckzylinder entlang einer Bewegungsachse verfahren, die parallel zu der

Längsachse des Druckzylinders liegt. Der Antrieb für den Gravierstichel ist ein Schrittmotor, der bei jedem Puls einer Pulsfolge einen definierten Vorschub des Gravierstichel entlang der Bewegungsachse erzeugt. Somit kann durch Zählen der Pulse eine aktuelle axiale Position des Gravierstichels bestimmt werden. Um eine hohe Positioniergenauigkeit des Gravierstichels zu gewährleisten, schlägt DE 101 49 828 A1 ein Verfahren zur Korrektur von Lageabweichungen vor. Dieses Verfahren beinhaltet, dass vor der Gravur auf dem Vorschubweg des Gravierstichels axiale Messpositionen festgelegt werden und dass mit einer Messvorrichtung Lageabweichungen an den Messpositionen bestimmt werden. Die Lageabweichungen werden als Korrekturwerte in einem Korrekturwertspeicher bereitgestellt. Bei der Gravur werden die Lageabweichungen des Gravierstichels mit Hilfe der Werte aus dem Korrekturwertspeicher korrigiert.

Das bekannte Verfahren erfordert eine separate Aufnahme der Korrekturwerte. Die Positioniergenauigkeit beim Triggern des Maschinenteils hängt von der Dichte der Korrekturwerte ab. Die Aufnahme einer Vielzahl von Korrekturwerten kann wegen des damit verbundenen Aufwandes nachteilig sein. Noch problematischer ist allerdings, dass die Verfahrgeschwindigkeit des Maschinenteils relativ zu dem Werkstück bei dem bekannten Verfahren durch die Geschwindigkeit begrenzt ist, mit der die Lagekorrektur durchgeführt werden kann. Da die Korrekturwerte bei dem bekannten Verfahren aus einem Speicher ausgelesen und verarbeitet werden müssen, erfordert das bekannte Verfahren entweder schnelle und teure Steuerrechner oder der Vorschub des Maschinenteils ist nur vergleichsweise langsam möglich. Damit ist das bekannte Verfahren für die eingangs genannten, bevorzugten Anwendungsfälle nicht optimal.

Vor diesem Hintergrund ist es eine Aufgabe der vorliegenden Erfindung, ein Verfahren und eine Vorrichtung anzugeben, um ein Maschinenteil, das relativ zu einem Werkstück verfahren wird, schnell und mit einer hohen Positionsgenauigkeit zu triggern. Zusätzlich sollen das Verfahren und die Vorrichtung möglichst kostengünstig realisierbar sein.

Diese Aufgabe wird nach einem ersten Aspekt der Erfindung durch ein Verfahren zum positionsgenauen Triggern eines wahlweise aktivierbaren Maschinenteils gemäß Anspruch 1 gelöst,

Die Aufgabe wird nach einem zweiten Aspekt der Erfindung durch eine Vorrichtung zum positionsgenauen Triggern eines wahlweise aktivierbaren Maschinenteils gemäß Anspruch 10 gelöst.

Das neue Verfahren und die neue Vorrichtung werten zum Triggern des Maschinenteils eine Pulsfolge aus, die mit Hilfe eines Inkrementalgebers beim Verfahren des Maschinenteils entlang der Bewegungsachse erzeugt wird, so dass die Anzahl der Pulse der Pulsfolge zu einem Zeitpunkt ein Maß für die Entfernung ist, die das Maschinenteil in Bezug auf einen Referenzpunkt zurückgelegt hat. Es spielt keine Rolle, ob das Maschinenteil relativ zu einem feststehenden Werkstück verfahren wird, oder ob alternativ oder ergänzend das Werkstück bewegt wird. Der Einfachheit halber wird im Folgenden angenommen, dass jeweils das Maschinenteil verfahren wird, ohne dass dies als eine Beschränkung auf eine solche Realisierung verstanden werden soll.

Der Inkrementalgeber erzeugt eine Folge von "Ortspulsen", das heißt eine Folge von Pulsen, deren Anzahl repräsentativ für die relative Position des Maschinenteils zu dem Werkstück ist. Indem man die Anzahl der Ortspulse mit einer definierten Pulsanzahl vergleicht, kann eine äußerst schnelle und genaue Entscheidung getroffen werden, ob sich das Maschinenteil an einer gewünschten Triggerposition befindet, um beispielsweise eine Bearbeitung des Werkstücks durchzuführen. Der Vergleich von zwei Pulsanzahlen lässt sich mit wenigen, kostengünstigen Bauteilen, weitgehend ohne aufwändige Signalvorbereitung und vor allem sehr schnell durchführen.

Darüber hinaus hängt die Positionsgenauigkeit, mit der das Maschinenteil hier getriggert wird, praktisch nur von der Genauigkeit des Inkrementalgebers ab. Gleichlaufschwankungen des Antriebes für das Maschinenteil und/oder das Werkstück werden vollständig eliminiert. Zudem sind Inkrementalgeber mit einer hohen Auflösung und einer sehr exakten Teilung ohne weiteres erhältlich, weil solche Inkrementalgeber bei zahlreichen Maschinen, die eine positionsgenaue Bewegung eines Maschinenteils erfordern, verwendet werden, wie zum Beispiel bei Werkzeugmaschinen oder Koordinatenmessgeräten.

In bevorzugten Ausführungsbeispielen wird als Inkrementalgeber ein Glasmaßstab mit einer Teilung verwendet, die optisch, induktiv oder kapazitiv abgelesen wird. Bevorzugte Inkrementalgeber ermöglichen zudem eine Interpolation zwischen den physisch vorhandenen Teilungen, wodurch eine besonders hohe Auflösung und damit eine besonders exakte Triggerung erreicht werden kann.

Da die Positioniergenauigkeit hier praktisch allein von dem Inkrementalgeber abhängt, wird außerdem eine sehr hohe Reproduzierbarkeit erreicht, die eine sehr exakte Mehrfachbearbeitung des Werkstücks an ein und derselben Stelle ermöglicht.

Insgesamt ermöglichen das neue Verfahren und die neue Vorrichtung daher eine schnelle und kostengünstige Triggerung eines wahlweise aktivierbaren Maschinenteils, die zudem eine sehr hohe Positioniergenauigkeit und Reproduzierbarkeit bietet. Die oben genannte Aufgabe ist daher vollständig gelöst.

In einer bevorzugten Ausgestaltung der Erfindung werden die aktuelle Ortspulsanzahl und die erste Pulsanzahl innerhalb einer Zeitspanne miteinander verglichen, die kleiner ist als ein zeitlicher Abstand zweier benachbarter Ortspulse beim Verfahren des Maschinenteils. Dabei können die benachbarten Ortspulse in bevorzugten Varianten auch interpolierte Pulse zwischen realen Ortspulsen des Glasmassstabes sein.

Diese Ausgestaltung ermöglicht einen Vergleich der Pulsanzahlen in Echtzeit und somit eine besonders schnelle und exakte Triggerung des Maschinenteils.

In einer weiteren Ausgestaltung wird das erste Triggersignal in Abhängigkeit von der aktuellen Ortspulsanzahl wiederholt erzeugt, bis das Maschinenteil eine definierte Endposition erreicht hat. Vorzugsweise ist auch die Endposition in Form einer Pulsanzahl definiert, so dass das Erkennen der Endposition ebenfalls sehr schnell und exakt möglich ist.

Diese Ausgestaltung beinhaltet eine wiederholte Triggerung des Maschinenteils in Abhängigkeit von den Ortspulsen des Inkrementalgebers. Die Ausgestaltung besitzt den Vorteil, dass die Positionen, an denen das Maschinenteil getriggert wird, sehr exakt bestimmt sind und entsprechend exakt reproduziert werden können, beispielsweise für eine Nachbearbeitung oder eine Mehrfachbearbeitung des Werkstücks. Positionsschwankungen in Folge von Gleichlaufschwankungen der Antriebe sind eliminiert. Allerdings können sich Gleichlaufschwankungen der Antriebe auf die Triggerfrequenz auswirken, das heißt auf die zeitlichen Abstände, mit denen das Maschinenteil getriggert wird.

Daher ist es in einer alternativen Ausgestaltung bevorzugt, wenn das erste Triggersignal einen Impulsgenerator startet, der ein zweites Triggersignal mit einer Anzahl von zeitlich aufeinander folgenden "Zeitpulsen" erzeugt, wobei die Zeitpulse das Maschinenteil triggern.

In dieser Ausgestaltung dienen die Ortspulse des Inkrementalgebers also in erster Linie dazu, die Startposition für die Bearbeitung des Werkstücks mit dem Maschinenteil festzulegen. Sobald diese Startposition erreicht ist, was durch Vergleich der aktuellen Ortspulsanzahl mit einer geeignet definierten ersten Pulsanzahl festgestellt werden kann, übernimmt eine Folge von Zeitpulsen die Triggerung des Maschinenteils, und zwar vorzugsweise bis das Maschinenteil eine definierte Endposition erreicht hat. In dieser Ausgestaltung hängt die Triggerung des Maschinenteils in dem Streckenbereich zwischen der Startposition und der Endposition also nicht mehr exakt von dem Ort des Maschinenteils, sondern von der Zeit ab, die seit Überfahren der Startposition verstrichen ist.

Diese Ausgestaltung ist vorteilhaft, wenn das Maschinenteil sensibel auf Schwankungen der Arbeitsfrequenz reagiert bzw. wenn geringfügige Schwankungen bei den relativen Abständen der Bearbeitungspositionen weniger schwerwiegend sind als Schwankungen bei der Arbeitsfrequenz des Maschinenteils. Die "Zeitpulse" lassen sich beispielsweise mit einem quartzstabiliserten Oszillator sehr einfach und mit hoher Genauigkeit erzeugen. Trotzdem profitiert die Erfindung von den oben allgemein beschriebenen Vorteilen, weil das Erkennen der Startposition sehr einfach, schnell und mit einer hohen Positionsgenauigkeit erfolgt.

In einer weiteren Ausgestaltung der Erfindung wird das Maschinenteil zumindest nach dem Erzeugen des ersten Triggersignals mit einer konstanten Geschwindigkeit verfahren.

Diese Ausgestaltung ist in beiden Alternativen der Erfindung von Vorteil, um eine möglichst gleichmäßige Arbeitsfrequenz des Maschinenteils und möglichst gleichbleibende Abstände zwischen den Bearbeitungsstellen auf dem Werkstück zu erhalten.

In einer weiteren Ausgestaltung wird die konstante Geschwindigkeit in Abhängigkeit von einer Arbeitsfrequenz des Maschinenteils bestimmt. Vorzugsweise wird die konstante Geschwindigkeit außerdem in Abhängigkeit von der ersten Pulsanzahl bestimmt.

Diese Ausgestaltung ermöglicht eine schnelle Bearbeitung des Werkstücks, ohne das Maschinenteil, das die Bearbeitung ausführt, zu überlasten.

In einer weiteren Ausgestaltung der Erfindung werden die Ortspulse mit einem Digitalzähler gezählt, der beim Erzeugen des ersten Triggersignals auf einen definierten Startwert gesetzt wird. Der definierte Startwert kann aus einer Tabelle entnommen werden oder aus einer vorgegebenen Funktion berechnet werden, wobei die Tabelle und/oder die Funktion vorzugsweise in einer Recheneinheit abgespeichert sind, mit deren Hilfe der Digitalzähler auf den definierten Startwert gesetzt werden kann.

Digitalzähler sind sehr einfache und kostengünstige Bauelemente, die eine schnelle Auswertung des Inkrementalgebers ermöglichen. Indem der Digitalzähler beim Erzeugen des ersten Triggersignals jeweils auf einen definierten Startwert gesetzt wird, lassen sich konstante oder variable Bearbeitungsabstände sehr einfach und kostengünstig realisieren.

In einer weiteren Ausgestaltung führt das Maschinenteil beim Erzeugen des Triggersignals eine Aktion aus, wobei ein Fehlersignal erzeugt wird, wenn die Aktion ausbleibt oder erfolglos ist. Bei der Bearbeitung eines Werkstücks mit einem Laser kann das Fehlersignal beispielsweise erzeugt werden, wenn der Laser zum Zeitpunkt des Triggersignals noch nicht genügend Energie aufgebaut hat, um eine erfolgreiche Bearbeitung auszuführen.

Diese Ausgestaltung ist vorteilhaft, weil sie eine Identifikation von Fehlerstellen an dem bearbeiteten Werkstück vereinfacht. Dabei werden die Fehlerstellen mit derselben Genauigkeit identifiziert, mit der auch die Bearbeitung des Werkstücks erfolgt.

In einer weiteren Ausgestaltung wird die aktuelle Ortspulsanzahl in einem Fehlerspeicher gespeichert, wenn das Fehlersignal auftritt.

Diese Ausgestaltung ermöglicht eine exakte Nachbearbeitung einer fehlerhaften Stelle an dem Werkstück, indem das Maschinenteil in einem erneuten Durchlauf exakt wieder an die Stelle verfahren wird, die der abgespeicherten Ortspulsanzahl entspricht. Sofern erforderlich, ist es von Vorteil, wenn die abgespeicherte Ortspulsanzahl eine evtl. Totzeit berücksichtigt, um die das Fehlersignal verzögert ausgegeben wird.

In einer weiteren Ausgestaltung wird das Maschinenteil mit Hilfe eines Antriebsregelkreises verfahren, wobei der Antriebsregelkreis die aktuelle Ortspulsanzahl erhält, um eine Istposition des Maschinenteils zu bestimmen. Eine bevorzugte Ausgestaltung der neuen Vorrichtung beinhaltet daher einen Antriebsregelkreis mit einem Antrieb zum Verfahren des Maschinenteils und mit einem Regler, der den Antrieb ansteuert und der die aktuelle Ortspulsanzahl als Istposition des Maschinenteils erhält.

In dieser Ausgestaltung wird das Maschinenteil in "klassischer" Weise mit einem Antriebsregelkreis verfahren. Dies ermöglicht eine genaue Bewegung des Maschinenteils, wodurch die positionsgenaue Triggerung vereinfacht wird. Da der Antriebsregelkreis nach dieser Ausgestaltung außerdem auch die aktuelle Ortspulsanzahl erhält, lässt sich die Erfindung sehr einfach und kostengünstig realisieren und in bewährte Antriebsregelkonzepte integrieren.

Besonders bevorzugt ist es, wenn die Vorrichtung ferner eine programmierbare Recheneinheit aufweist, die eine Schnittstellenkarte zum Anschluss des Inkrementalgebers und einen Prozessor beinhaltet, wobei der Regler als ein Reglerprogramm realisiert ist, das von dem Prozessor zyklisch abgearbeitet wird, und wobei zumindest der Vergleicher und der Signalgenerator auf der Schnittstellenkarte realisiert sind.

In dieser Ausgestaltung erzeugt die Schnittstellenkarte das Triggersignal für das Maschinenteil praktisch direkt aus den Ortspulsen, die von dem Inkrementalgeber geliefert werden. Dies geht extrem schnell und ermöglicht somit eine hohe Ortsauflösung und Genauigkeit. Darüber hinaus stehen die Ortspulse, die auf der Schnittstellenkarte vorhanden sind, für den übergeordneten Regler zur Verfügung, der hier in Form von Computersoftware realisiert ist. Diese Ausgestaltung ist besonders kostengünstig. Als Recheneinheit eignet sich beispielsweise ein herkömmlicher Pentium® PC, wobei die Erzeugung des Triggersignals hier unter Umgehung des Prozessors und der damit verbundenen Datenverarbeitung direkt auf Signalebene erfolgt.

In einer weiteren Ausgestaltung der Erfindung liest der Antriebsregelkreis die aktuelle Ortspulsanzahl zyklisch mit einer Zykluszeit ein, die größer ist als ein zeitlicher Abstand zwischen zwei benachbarten Ortspulsen.

Diese Ausgestaltung ermöglicht einen komplexen (und damit langsamen) Regelalgorithmus für den Antrieb des Maschinenteils und/oder des Werkstücks. Infolgedessen kann das Maschinenteil mit einer hohen Grundgenauigkeit relativ zu dem Werkstück verfahren werden. Außerdem lassen sich zahlreiche Umgebungsparameter, wie zum Beispiel Temperatur, Vibrationen oder zur Verfügung stehende Antriebsleistung berücksichtigen. Des weiteren wird der Bedienkomfort der Vorrichtung erhöht. Trotzdem profitiert diese Ausgestaltung von den weiter oben beschriebenen, allgemeinen Vorteilen der Erfindung, insbesondere der schnellen, exakten und kostengünstigen Triggerung des Maschinenteils.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung eines Ausführungsbeispiels der neuen Vorrichtung,
- Figur 2: ein Flussdiagramm zur Erläuterung eines ersten Ausführungsbeispiels der Erfindung,
- Figur 3: ein Blockschaltbild zur Erläuterung des ersten Ausführungsbeispiels,
- Figur 4: ein Flussdiagramm zur Erläuterung eines zweiten Ausführungsbeispiels, und
- Figur 5: ein Blockdiagramm zur Erläuterung des zweiten Ausführungsbeispiels.

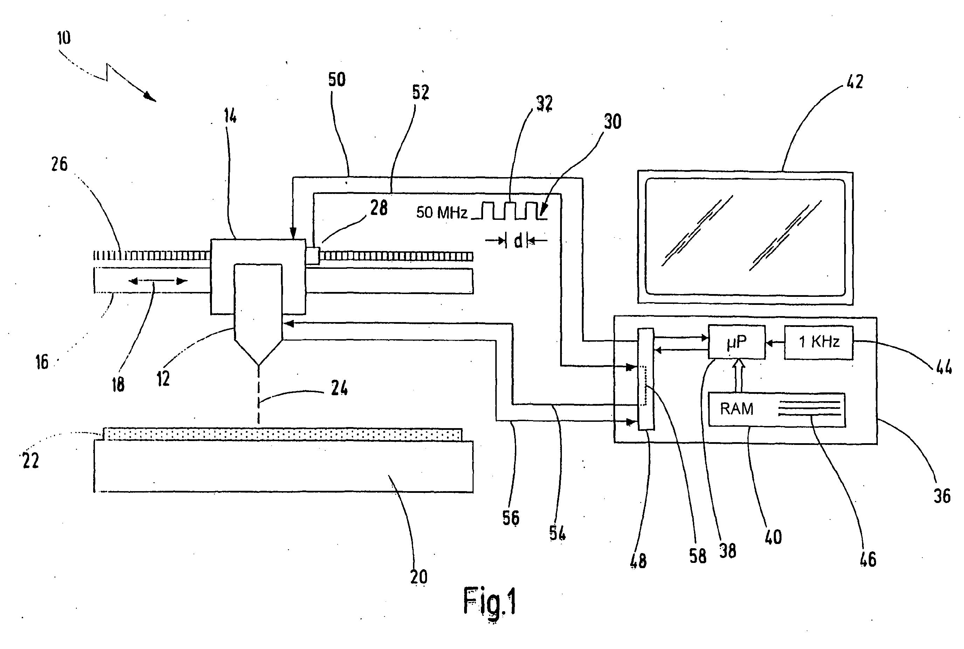

In Figur 1 ist ein Ausführungsbeispiel der neuen Vorrichtung in seiner Gesamtheit mit der Bezugsziffer 10 bezeichnet. Die Vorrichtung 10 beinhaltet hier einen Laser 12, der über einen Antrieb 14 an einer Führungsschiene 16 gelagert ist. Der Laser 12 kann mit Hilfe des Antriebs 14 an der Führungsschiene 16 entlang bewegt werden, wie mit einem Doppelpfeil 18 angedeutet ist, der auch die Bewegungsachse des Lasers 12 symbolisiert.

Mit der Bezugsziffer 20 ist ein Maschinentisch bezeichnet, der in diesem Ausführungsbeispiel feststehend ist. Auf dem Maschinentisch 20 ist ein Werkstück 22 angeordnet, das mit Hilfe eines Laserstrahls 24 auf dem Laser 12 an verschiedenen Bearbeitungspositionen bearbeitet wird.

In diesem Ausführungsbeispiel ist das Werkstück 22 beispielsweise eine Glasscheibe für einen Flüssigkristallbildschirm. Die Glasscheibe muss mit Hilfe des Laserstrahls 24 an einer Vielzahl von Bearbeitungspositionen punktuell erhitzt werden, wobei der Abstand und die Lage der Bearbeitungspositionen für die Qualität der Bearbeitung eine wichtige Rolle spielen: Die Erfindung ist jedoch nicht auf solche Anwendungsfälle beschränkt und kann allgemein in allen Fällen angewendet werden, bei denen ein Maschinenteil (hier der Laser 12) relativ zu einem Werkstück 22 verfahren werden muss, um eine positionsgenaue Bearbeitung zu ermöglichen. Dabei umfasst der Begriff "bearbeiten" hier auch Vorgänge, die keine Veränderung des Werkstücks 22 an den Bearbeitungspositionen hervorrufen, wie etwa eine fotografische Aufnahme des Werkstücks 22.

Alternativ zu dem hier dargestellten Ausführungsbeispiel kann das Maschinenteil 12 feststehend sein, während der Maschinentisch 20 bewegt wird. Des Weiteren ist es möglich, dass sowohl das Maschinenteil 12 als auch der Maschinentisch 20 relativ zueinander bewegt werden.

Mit der Bezugsziffer 26 ist ein Glasmaßstab bezeichnet, der parallel zu der Führungsschiene 16 angeordnet ist. Bezugsziffer 28 bezeichnet einen Inkrementalgeber, der mit dem verfahrbaren Laser 12 verbunden ist. Der Inkrementalgeber 28 erzeugt mit Hilfe des Glasmaßstabs 26 eine Pulsfolge 30 mit einer Anzahl von Ortspulsen 32, wobei die Anzahl der Ortspulse 32 repräsentativ ist für die Position des Lasers 12 entlang der Bewegungsachse 18. Typischerweise besitzt der Glasmaßstab 26 eine Referenzmarke (hier nicht dargestellt), die den "Nullpunkt" repräsentiert. Die Ortspulse 32 der Pulsfolge 30 geben die Position des Lasers 12 relativ zu der Referenzmarkierung an.

Das Ausführungsbeispiel in Figur 1 ist insoweit vereinfacht dargestellt, als dass der Inkrementalgeber 28 typischerweise zunächst ein Sinus- und Kosinussignal erzeugt. Die Pulsfolge 30 wird aus den beiden Signalen in einer nachfolgenden Verarbeitungsstufe erzeugt, wobei die Pulsfolge 30 auch Zwischenpulse beinhalten kann, die durch eine Interpolation gewonnen werden.

In einem bevorzugten Ausführungsbeispiel besitzt die Pulsfolge 30 eine Frequenz in der Größenordnung von etwa 50 MHz, wenn der Laser 12 mit seiner optimalen Arbeitsgeschwindigkeit an der Führungsschiene 16 entlang bewegt wird. Der zeitliche Abstand d zwischen zwei Pulsen 32 der Pulsfolge liegt dementsprechend in der Größenordnung von 20 Nanosekunden.

Mit der Bezugsziffer 36 ist ein PC mit einem Prozessor 38 und einem Speicher 40 bezeichnet. In einem bevorzugten Ausführungsbeispiel handelt es sich um einen Pentium® PC. Bezugsziffer 42 bezeichnet einen Monitor für den PC. Außerdem besitzt der PC 36 in diesem Ausführungsbeispiel einen Taktgenerator 44, der ein Taktsignal mit einer Frequenz von etwa 1 KHz erzeugt. Der Taktgenerator 44 dient dazu, in der angegebenen Frequenz einen Interrupt zu erzeugen, der den Prozessor 38 veranlasst, ein Programm 46 auszuführen, das im Speicher 40 abgelegt ist. Das Programm 46 beinhaltet einen Regelalgorithmus, mit dem der Antrieb 14 in an sich bekannter Weise angesteuert wird.

Etwas genauer erzeugt der Prozessor 38 mit Hilfe des Programms 46 und mit Hilfe einer Schnittstellenkarte 48 ein Antriebssteuersignal, das dem Antrieb 14 über eine Verbindung 50 zugeführt ist. Umgekehrt erhält der Prozessor 38 von der Schnittstellenkarte 48 die Pulsfolge 30 des Inkrementalgebers 28 als Istposition des Antriebes 14 entlang der Bewegungsachse 18. Eine entsprechende Verbindung zwischen dem Inkrementalgeber 28 und der Schnittstellenkarte 48 ist mit der Bezugsziffer 52 bezeichnet.

Wie bereits weiter oben erwähnt, können auf der Verbindung 52 an Stelle der Pulsfolge 30 auch ein oder mehrere analoge Signale übertragen werden, und die Pulsfolge 30 wird erst durch eine entsprechende Signalverarbeitung auf der Schnittstellenkarte 48 (hier nicht dargestellt) erzeugt. Entsprechende Schnittstellenkarten 48 und Regelalgorithmen 46 sind den einschlägigen Fachleuten auf diesem Gebiet bekannt und daher der Einfachheit halber nicht weiter erläutert.

Abweichend von bekannten Schnittstellenkarten ist die Schnittstellenkarte 48 hier jedoch über zwei weitere Verbindungen 54, 56 mit dem Laser 12 verbunden. Über die Verbindung 54 überträgt die Schnittstellenkarte 48 ein Triggersignal, das den Laser 12 veranlasst, den Laserstrahl 24 auszusenden. Über die Verbindung 56 überträgt der Laser 12 ein Fehlersignal, wenn die Erzeugung des Laserstrahls 24 trotz vorhandenem Triggersignal 54 ausgeblieben ist (beispielsweise weil noch nicht genügend Energie zur Erzeugung des Laserstrahls 24 zur Verfügung stand) oder wenn die Bearbeitung des Werkstücks 22 aus anderen Gründen vermutlich fehlerhaft war.

Gemäß einem Aspekt der vorliegenden Erfindung wird das Triggersignal 54 für den Laser 12 direkt anhand der Pulsfolge 30 erzeugt, das heißt unter Umgehung des Regelalgorithmus 46. In dem bevorzugten Ausführungsbeispiel wird das Triggersignal 54 direkt auf der Schnittstellenkarte 48 erzeugt, was mit einer "Brücke" 58 symbolisch dargestellt ist.

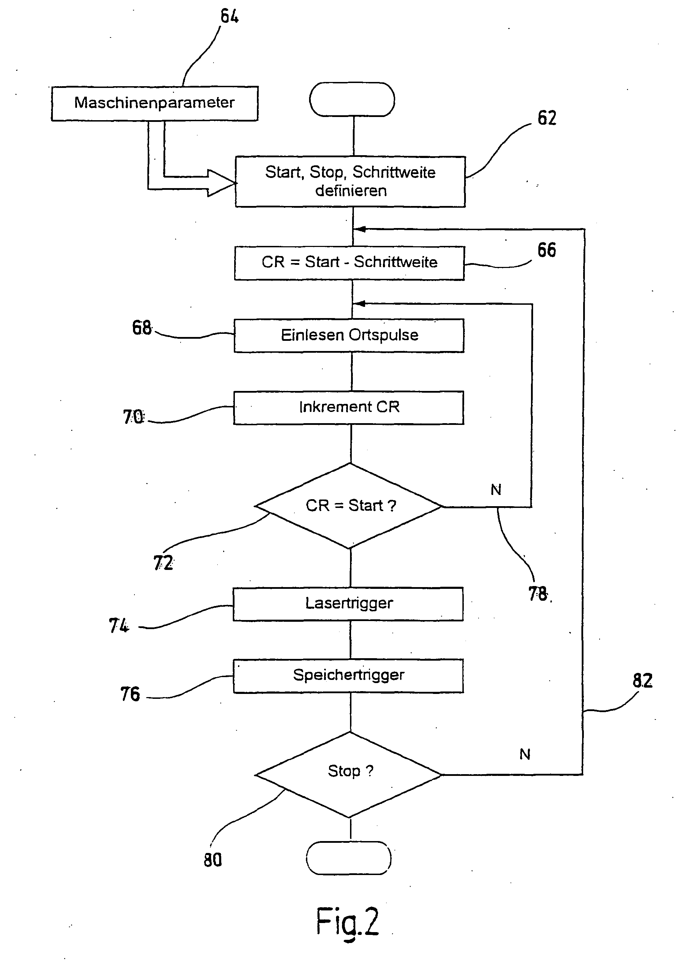

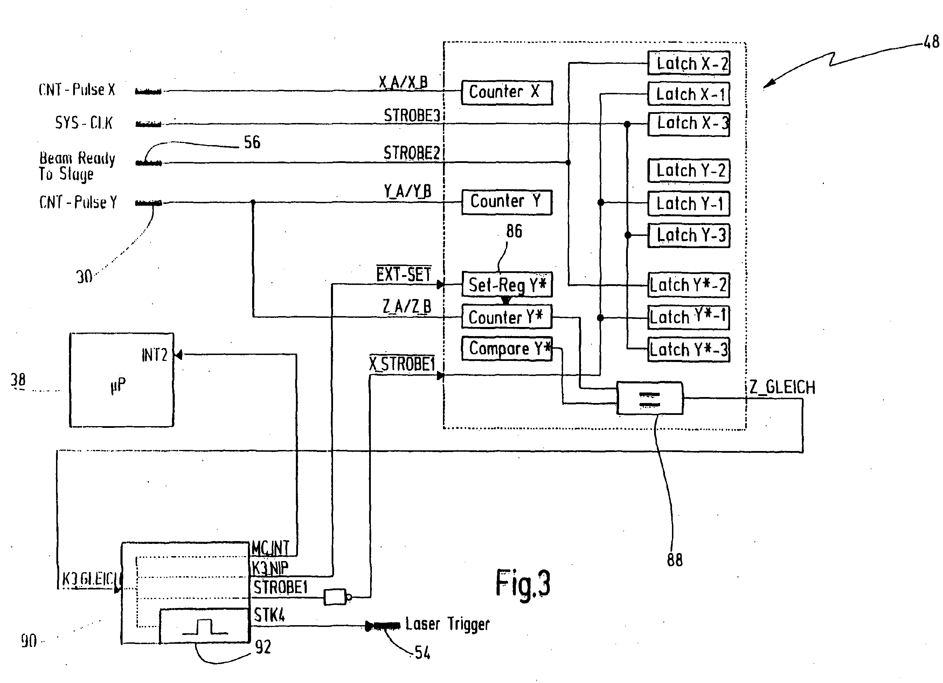

Figur 2 zeigt anhand eines vereinfachten Flussdiagramms ein erstes Ausführungsbeispiel der Erfindung. Gemäß Schritt 62 werden zunächst eine Startposition, eine Stopp- bzw. Endposition und eine Schrittweite für die Laserbearbeitung des Werkstücks 22 definiert, indem entsprechende Pulsanzahlen in Bezug auf die Pulsfolge 30 festgelegt und in Speicherregister eingeschrieben werden, die sich auf der Schnittstellenkarte 48 befinden (wird weiter unten anhand Figur 3 näher ausgeführt).

Gemäß Schritt 64 werden bei der Definition der Pulsanzahlen, die der Startposition, der Stopp- bzw. Endposition und der Schrittweite entsprechen, Maschinenparameter der Vorrichtung 10 berücksichtigt, insbesondere die optimale Arbeitsfrequenz des Lasers 12 sowie die maximale Verfahrgeschwindigkeit des Antriebs 14. Die Pulsanzahl, die die Schrittweite für die Laserbearbeitung repräsentiert, wird so gewählt, dass die Verfahrgeschwindigkeit des Antriebs 14 unterhalb der maximalen Verfahrgeschwindigkeit liegt und dass die gewählte Verfahrgeschwindigkeit eine Bearbeitung des Werkstücks 22 mit einer Arbeitsfrequenz des Lasers 12 ermöglicht, die in etwa der optimalen Arbeitsfrequenz des Lasers 12 entspricht.

Gemäß Schritt 66 wird anschließend ein Zählregister CR auf einen Startwert gesetzt, der sich aus der Differenz der Pulsanzahlen für die Startposition und die Schrittweite ergibt.

Gemäß Schritt 68 wird dann der Antrieb 14 entlang der Bewegungsachse 18 verfahren und es werden die Ortspulse 32 der Pulsfolge 30 eingelesen.

Gemäß Schritt 70 wird das Zählregister CR mit jedem Ortspuls 32 inkrementiert, das heißt die Anzahl der Ortspulse 32 wird gezählt.

Im Schritt 72 wird der Stand des Zählregisters CR überprüft. Wenn das Zählregister CR einen Zählwert besitzt, der gleich der Pulsanzahl ist, die die Startposition repräsentiert, ist der Laser 12 entlang der Bewegungsachse 18 um eine Strecke verfahren worden, die der gewählten Schrittweite entspricht. In diesem Fall wird gemäß Schritt 74 ein Triggersignal 54 erzeugt und an den Laser 12 übertragen. Der Laser 12 erzeugt in Abhängigkeit von dem Triggersignal 54 den Laserstrahl 24.

Außerdem wird hier gemäß Schritt 76 ein weiteres Triggersignal erzeugt, mit dem die aktuelle Pulsanzahl, die die aktuelle Position des Lasers 12 repräsentiert, in einem Speicherregister auf der Schnittstellenkarte 48 abgespeichert wird. Mit Hilfe der gespeicherten Pulsanzahl kann die bearbeitete Position später exakt wieder angefahren werden.

Solange der Zählerstand im Zählregister CR kleiner ist als der Zahlenwert, der der Startposition entspricht, werden weitere Pulse 32 der Pulsfolge 30 eingelesen (Schleife 78).

Des Weiteren wird im Schritt 80 überprüft, ob der Laser 12 bereits die vorgesehene Stopp- bzw. Endposition erreicht hat. Ist dies der Fall, endet das Verfahren. Andernfalls wird das Zählregister CR gemäß Schritt 66 wieder auf seinen Startwert zurückgesetzt, und es erfolgt ein neuer Schleifendurchlauf gemäß Schleife 82.

In dem Ausführungsbeispiel gemäß Figur 2 wird das Triggersignal 54 für den Laser 12 also jeweils dann erzeugt, wenn der Laser 12 um eine Strecke verfahren wurde, die der eingestellten Schrittweite entspricht, wobei sowohl die Position des Lasers 12 als auch die eingestellte Schrittweite durch die Anzahl von Ortspulsen 32 der Pulsfolge 30 repräsentiert sind. Die Triggerung des Lasers 12 erfolgt, wenn die aktuelle Ortspulsanzahl um ein Vielfaches der eingestellten Schrittweite größer ist als die Pulsanzahl, die der Startposition des Lasers 12 entspricht.

Die Fachleute auf diesem Gebiet werden erkennen, dass die Schrittweite über die gesamte Strecke, über die der Laser 12 verfahren wird, konstant sein kann oder variieren kann. Im letztgenannten Fall wird das Zählregister CR bei jedem Schleifendurchlauf 82 auf einen anderen Startwert gesetzt, wobei es genügt, lediglich den Parameter für die Schrittweite zu variieren. Im erstgenannten Fall wird das Zählregister CR im Schritt 66 jeweils auf denselben Startwert zurückgesetzt.

Figur 3 zeigt ein Blockschaltbild mit wesentlichen Funktionsgruppen, die auf der Schnittstellenkarte 48 realisiert sind, um das Verfahren gemäß Figur 2 auszuführen. Gleiche Bezugszeichen bezeichnen dieselben Elemente wie zuvor.

In einem bevorzugten Ausführungsbeispiel besitzt die Schnittstellenkarte 48 mehrere Zählregister, die in Figur 3 als Counter X, Counter Y und Counter Y* bezeichnet sind. Die Zählregister Counter Y und Counter Y* erhalten jeweils die Pulsfolge 30 als Eingangssignal, und sie inkrementieren ihren Zählerstand mit jedem Ortspuls 32.

Das Zählregister Counter Y wird hier verwendet, um die Istposition des Lasers 12 entlang der Bewegungsachse 18 zu bestimmen. Insbesondere wird das Zählregister Counter Y von dem Prozessor 38 ausgelesen, um den Antrieb 14 mit Hilfe des Regelalgorithmus 46 anzusteuern. Demgegenüber wird das Zählregister Counter Y* regelmäßig auf einen Startwert zurückgesetzt, wie dies weiter oben im Hinblick auf Schritt 66 in Figur 2 erläutert wurde. Hierzu ist das Zählregister Counter Y* mit einem Setzregister 86 verbunden, aus dem der Startwert gemäß Schritt 66 aus Figur 2 in das Zählregister Counter Y* geschrieben werden kann. In einem weiteren Register, das hier mit Compare Y* bezeichnet ist, ist ein Zahlenwert abgespeichert, der die Startposition für die Bearbeitung des Werkstücks 22 repräsentiert.

Bezugsziffer 88 bezeichnet einen Vergleicher, in dem die Zählerstände in den Registern Counter Y* und Compare Y* verglichen werden, was Schritt 72 aus Figur 2 entspricht. Wenn die Zählerstände gleich sind, erzeugt der Vergleicher 88 ein Signal, das hier einem Signalverteiler 90 zugeführt ist. Der Signalverteiler 90 beinhaltet einen Signalgenerator 92, der das Triggersignal 54 für den Laser 12 erzeugt.

In dem dargestellten Ausführungsbeispiel handelt es sich um einen Triggerimpuls mit einer Impulsbreite im Bereich von etwa 15 µs. Außerdem erzeugt der Signalverteiler 90 einen Speichertrigger (gemäß Schritt 76 aus Figur 2), der in Figur 3 mit Strobe 1 bezeichnet ist. Mit dem Speichertrigger werden Speicherregister aktiviert, in denen aktuelle Zählerstände der Zählregister abgespeichert werden.

Des Weiteren erzeugt der Signalverteiler 90 ein Steuersignal (hier als K3_NIP) bezeichnet, mit dessen Hilfe der Startwert aus dem Setzregister 86 in das Zählregister Counter Y* übernommen wird (gemäß Schritt 66 in Figur 2). Schließlich erzeugt der Signalverteiler 90 ein Interrupt-Anforderungssignal, das dem Prozessor 38 zugeführt ist, wodurch der Prozessor 38 veranlasst wird, die Speicherregister auf der Schnittstellenkarte 48 auszulesen.

Mit der Bezugsziffer 56 ist das Fehlersignal bezeichnet, das vom Laser 12 an die Schnittstellenkarte 48 übertragen wird, wenn die Bearbeitung des Werkstücks 22 (vermutlich) erfolglos war. Das Signal 56 aktiviert ebenfalls Speicherregister auf der Schnittstellenkarte 48, damit diese den aktuellen Zählerstand im Zählregister Counter Y zwischenspeichern, so dass die fehlerhafte Position in einem späteren Bearbeitungsdurchgang erneut angefahren werden kann.

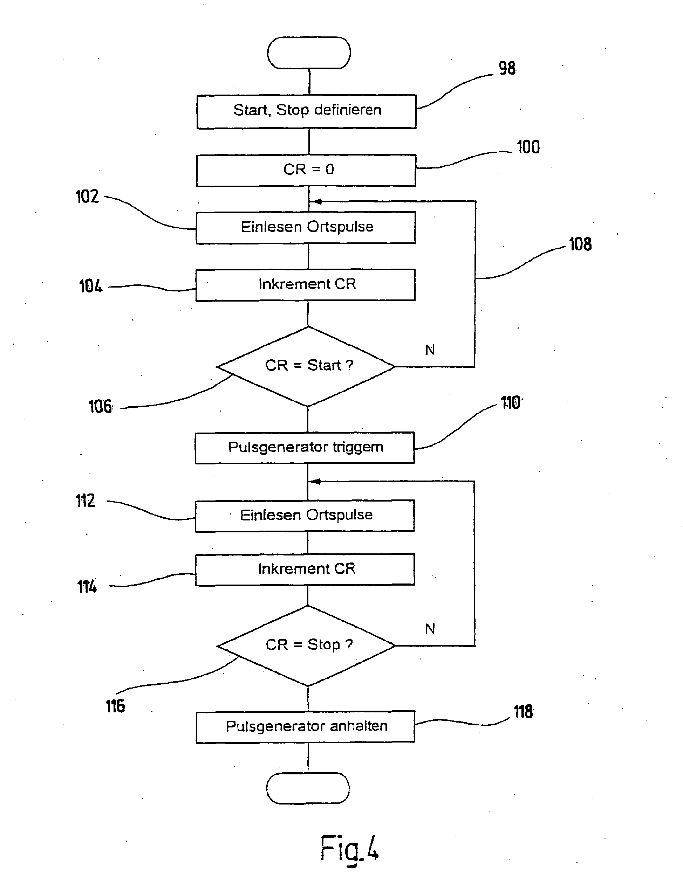

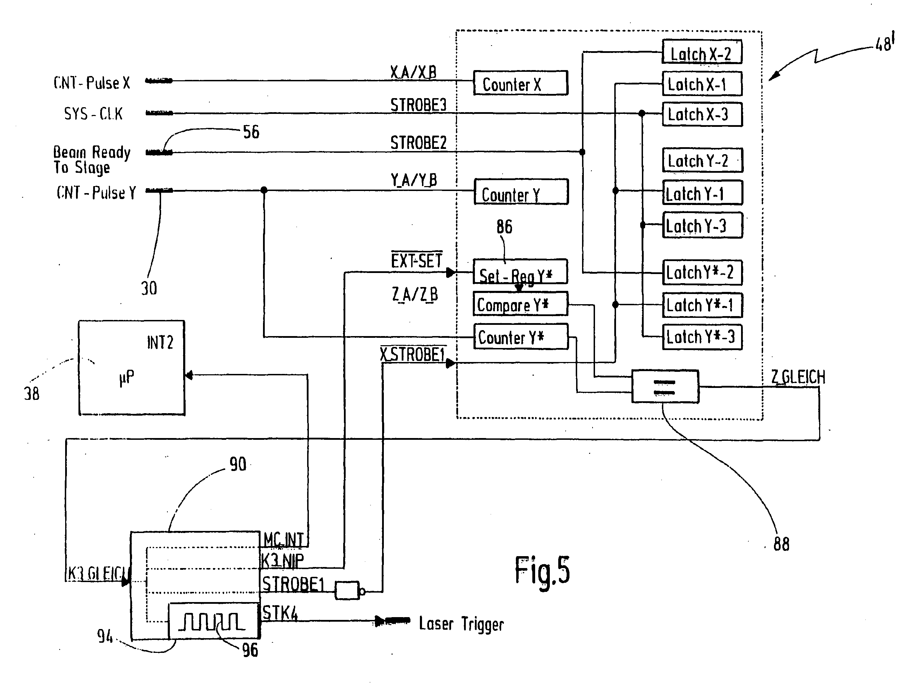

Die Figuren 4 und 5 zeigen ein weiteres Ausführungsbeispiel, in dem das Triggersignal 54 für den Laser 12 nicht allein anhand der Ortspulse 32, sondern in Ergänzung hierzu mit Hilfe eines Impulsgenerators 94 erzeugt wird, der eine Vielzahl von zeitlich aufeinanderfolgenden "Zeitpulsen" 96 (Figur 5) erzeugt. Im Übrigen bezeichnen gleiche Bezugszeichen dieselben Elemente wie zuvor.

Gemäß Schritt 98 beginnt das Verfahren wiederum mit der Definition von Start- und Stopp-/Endpositionen, wobei diese Positionen wiederum in Form von Ortspulsanzahlen definiert werden. Gemäß Schritt 100 wird das Zählregister Counter Y* zunächst auf Null gesetzt. Anschließend werden gemäß Schritt 102, 104 die Ortspulse 32 der Pulsfolge 30 eingelesen und das Zählregister CR (= Counter Y*) wird mit jedem Ortspuls 32 inkrementiert.

Gemäß Schritt 106 wird als nächstes geprüft, ob der Zählerstand im Zählregister CR gleich dem Startwert (in Form einer Ortspulsanzahl) ist. Solange dies nicht der Fall ist, verbleibt das Verfahren in der Schleife 108. Der Vergleich des Zählregisters CR (Counter Y*) mit dem Startwert erfolgt wiederum mit dem Vergleicher 88 (Figur 5). Der Startwert wird aus dem Setzregister 88 in das Vergleichsregister Compare Y* eingeschrieben, wenn der Signalverteiler 90 das entsprechende Übernahmesignal K3_NIP erzeugt (im Verfahrensschritt 100).

Sobald die Zählerstände in dem Zählregister Counter Y* und dem Vergleichsregister Compare Y* gleich sind, wird gemäß Schritt 110 der Impulsgenerator 94 getriggert. Dieser erzeugt eine Pulsfolge mit Zeitpulsen 96, die den Laser 12 wiederholt triggern.

Es versteht sich, dass der Laser 12 während der Erzeugung der Zeitpulsfolge 96 mit einer möglichst konstanten Geschwindigkeit entlang der Bewegungsachse 18 verfahren wird. Vorzugsweise wird der Antrieb 14 aus dem Stillstand beschleunigt und mit Hilfe der Antriebsregelung 46 so angesteuert, dass er beim Überfahren der Startposition (entsprechend dem eingestellten Zählerstand im Vergleichsregister Compare Y*) die Konstantgeschwindigkeit erreicht hat.

Während der Impulsgenerator 94 die Zeitpulsfolge 96 zum Triggern des Lasers 12 erzeugt, werden gemäß Schritt 112, 114 die Ortspulse 32 der Pulsfolge 30 weitergezählt, bis gemäß Schritt 116 die Stopp- bzw. Endposition für die Bearbeitung des Werkstücks 22 erreicht ist. Dann wird der Impulsgenerator 94 gemäß Schritt 118 angehalten.

## Patentansprüche

1. Verfahren zum positionsgenauen Triggern eines wahlweise aktivierbaren Maschinenteils (12), das dazu ausgebildet ist, ein Werkstück (22) zu bearbeiten, insbesondere einen Laser beinhaltet, und das entlang von zumindest ei-ner Bewegungsachse (18) relativ zu dem Werkstück (22) verfahren wird, um eine positionsgenaue Bearbeitung des Werkstücks (22) an voneinander beabstandeten Bearbeitungspositionen zu ermöglichen, mit den Schritten:
- Bereitstellen eines Inkrementalgebers (28), der beim Verfahren des Maschinenteils (12) entlang der Bewegungsachse (18) eine erste Pulsfolge (30) mit einer ansteigenden Anzahl von Ortspulsen (32) erzeugt, wobei die Anzahl der Ortspulse (32) eine Verfahrposition des Maschinenteils (12) repräsentiert,
- Definieren (66; 100) einer ersten Pulsanzahl, die eine gewünschte Triggerposition des Maschinenteils (12) repräsentiert,
- Zählen (70; 104) der Ortspulse beim Verfahren des Maschinenteils (12), um eine aktuelle Ortspulsanzahl zu bestimmen,
- Vergleichen (77; 106) der aktuellen Ortspulsanzahl mit der ersten Pulsanzahl, und
- Erzeugen (74; 110) eines ersten Triggersignals (54; Z_GLEICH) zum Triggern des Maschineriteils (12), wenn die aktuelle Ortspulsanzahl der ersten Pulsanzahl entspricht,
**dadurch gekennzeichnet, dass** das Maschinenteil (12) mit Hilfe eines Antriebsregelkreises (14, 28, 38, 44, 46) mit einem Regelalgorithmus (46) verfahren wird, wobei der Antriebsregelkreis (14, 28, 38, 44, 46) die aktuelle Ortspulsanzahl erhält, um eine Istposition des Maschinenteils (12) zu bestimmen, wobei der Antriebsregelkreis die aktuelle Ortspulsanzahl zyklisch mit einer Zykluszeit (44) einliest, die größer ist als ein zeitlicher Abstand (d) zwischen zwei benachbarten Ortspulsen (32), und wobei das erste Triggersignal (54; Z_GLEICH) für das Maschinenteil (12) unter Umgehung des Regelalgorithmus (46) direkt anhand der Pulsfolge (30) erzeugt wird.

2. Verfahren nach Anspruch 1, **dadurch gekennzeichnet, dass** die aktuelle Ortspulsanzahl und die erste Pulsanzahl innerhalb einer Zeitspanne miteinander verglichen werden, die kleiner ist als ein zeitlicher Abstand (d) zweier benachbarter Ortspulse beim Verfahren des Maschinenteils (12).

3. Verfahren nach Anspruch 1 oder 2, **dadurch gekennzeichnet, dass** das erste Triggersignal (54; Z_GLEICH) in Abhängigkeit von der aktuellen Ortspulsanzahl wiederholt (82) erzeugt wird, bis das Maschinenteil (12) eine definierte Endposition erreicht hat.

4. Verfahren nach Anspruch 1 oder 2, **dadurch gekennzeichnet, dass** das erste Triggersignal (Z_GLEICH) einen Impulsgenerator (94) startet, der ein zweites Triggersignal (96) mit einer Anzahl von zeitlich aufeinander folgenden Zeitpulsen erzeugt, wobei die Zeitpulse das Maschinenteil (12) triggern.

5. Verfahren nach einem der Ansprüche 1 bis 4, **dadurch gekennzeichnet, dass** der Maschinenteil (12) zumindest nach dem Erzeugen des ersten Triggersignals (54) mit einer konstanten Geschwindigkeit verfahren wird.

6. Verfahren nach Anspruch 5, **dadurch gekennzeichnet, dass** die konstante Geschwindigkeit in Abhängigkeit von einer Arbeitsfrequenz (64) des Maschinenteils bestimmt wird.

7. Verfahren nach einem der Ansprüche 1 bis 6, **dadurch gekennzeichnet, dass** die Ortspulse (32) mit einem Digitalzähler (Counter Y*) gezählt werden, der beim Erzeugen des ersten Triggersignals (Z_GLEICH) auf einen definierten Startwert gesetzt (66) wird.

8. Verfahren nach einem der Ansprüche 1 bis 7; **dadurch gekennzeichnet, dass** das Maschinenteil (12) beim Erzeugen des Triggersignals (54) eine Aktion ausführt, wobei ein Fehlersignal (56) erzeugt wird, wenn die Aktion ausbleibt oder erfolglos ist.

9. Verfahren nach Anspruch 8, **dadurch gekennzeichnet, dass** die aktuelle Ortspulsanzahl in einem Fehlerspeicher (Latch Y*-2) gespeichert wird, wenn das Fehlersignal (56) auftritt.

10. Vorrichtung zum positionsgenauen Triggern eines wahlweise aktivierbaren Maschinenteils (12), wobei das Maschimenteil dazu ausgebildet ist, ein Werkstück (22) zu bearbeiten, insbesondere einen Laser beinhaltet, und das entlang von zumindest einer Bewegungsachse (18) relativ zu einem Werkstück (22) verfahren werden kann, um eine positionsgenaue Bearbeitung des Werkstücks (22) an voneinander beabstandeten Bearbeitungspositionen zu ermöglichen, mit
- einem Inkrementalgeber (28), der beim Verfahren des Maschinenteils (12) entlang der Bewegungsachse (18) eine erste Pulsfolge (30) mit einer ansteigenden Anzahl von Ortspulsen (32) erzeugt, wobei die Anzahl der Ortspulse (32) eine Verfahrposition des Maschinenteils (12) repräsentiert,
- einem Speicher (86) zum Abspeichern einer ersten Pulsanzahl, die eine gewünschte Triggerposition des Maschinenteils repräsentiert,
- einem Zähler (Counter Y*) zum Zählen der Ortspulse (32) beim Verfahren des Maschinenteils (12), um eine aktuelle Ortspulsanzahl zu bestimmen,
- einem Vergleicher (88) zum Vergleichen der aktuellen Ortspulsanzahl mit der ersten Pulsanzahl, und
- einem Signalgenerator (90; 94) zum Erzeugen eines ersten Triggersignals (54; Z_GLEICH) zum Triggern des Maschinenteils (12), wenn die aktuelle Ortspulsanzahl der ersten Pulsanzahl entspricht,
gekenrizeichnet durch einen Antriebsregelkreis mit einem Antrieb (14) zum Verfahren des Maschinenteils (12) und mit einem Regler (46) mit einem Regelalgorithmus, der den Antrieb (14) ansteuert und der die aktuelle Ortspülsanzahl als Istposition des Maschinenteils (12) erhält, wobei der Antriebsregelkreis die aktuelle Ortspulsanzahl zyklisch mit einer Zykluszeit (44) einliest, die größer ist als ein zeitlicher Abstand (d) zwischen zwei benachbarten Ortspulsen (32), und wobei das erste Triggersignal (54; Z_GLEICH) für das Maschinenteil (12) unter Umgehung des Regelalgorithmus (46) direkt anhand der Pulsfolge (30) erzeugt wird.

11. Vorrichtung nach Anspruch 10 ferner mit einer programmierbaren Recheneinheit (36), die eine Schnittstellenkarte (48) zum Anschluss des Inkrementalgebers (28) und einen Prozessor (38) beinhaltet, wobei der Regler (46) als ein Reglerprogramm realisiert ist, das von dem Prozessor (38) zyklisch abgearbeitet wird, und wobei zumindest der Vergleicher (88) und der Signalgenerator (90; 94) auf der Schnittstellenkarte (48) realisiert sind.

## Claims

1. A method for position-accurate triggering of a machine part (12) which can be selectively activated and is configured to process a workpiece (22), in particular it includes a laser, and which is moved along at least one axis of movement (18) relative to the workpiece (22), in order to allow position-accurate processing of the workpiece (22) at processing positions spaced one from another, the method comprising the steps of:
- providing an incremental encoder (28) which generates a first pulse train (30) having a rising number of position pulses (32) as the machine part (12) moves along the axis of movement (18), the number of position pulses (32) representing a movement position of the machine part (12),
- defining (66, 100) a first number of pulses which represents a desired trigger position for the machine part (12),
- counting (70; 104) the position pulses during movement of the machine part (12) in order to determine a current number of position pulses,
- comparing (77; 106) the current number of position pulses with the first number of pulses, and
- generating (74; 110) a first trigger signal (54; Z_EQUAL) in order to trigger the machine part (12) when the current number of position pulses corresponds to the first number of pulses,
**characterized in that** the machine part (12) is moved by means of a drive control circuit (14, 28, 38, 44, 46) having a control algorithm (46), wherein the drive control circuit (14, 28, 38, 44, 46) receives the current number of position pulses in order to determine an actual position of the machine part (12), wherein the drive control circuit reads the current number of position pulses cyclically with a cycle time (44) that is greater than a time interval (d) between two adjacent position pulses (32), and wherein the first trigger signal (54; Z_EQUAL) for the machine part (12) is directly generated from the pulse train (30), bypassing the control algorithm (46).

2. The method of claim 1, **characterized in that** the current number of position pulses and the first number of pulses are compared to one another within a time interval that is shorter than a time interval (d) between two adjacent position pulses during movement of the machine part (12).

3. The method of claim 1 or 2, **characterized in that** the first trigger signal (54; Z_EQUAL) is generated repeatedly (82) as a function of the current number of position pulses until the machine part (12) has reached a defined end position.

4. The method of claim 1 or 2, **characterized in that** the first trigger signal (Z_EQUAL) starts a pulse generator (94) which produces a second trigger signal (96) having a number of successive time pulses, with the time pulses triggering the machine part (12).

5. The method of one of claims 1 to 4, **characterized in that** the machine part (12) is moved at a constant speed, at least after the generation of the first trigger signal (54).

6. The method of claim 5, **characterized in that** the constant speed is determined as a function of an operating frequency (64) of the machine part.

7. The method of one of claims 1 to 6, **characterized in that** the position pulses (32) are counted using a digital counter (Counter Y*), which is set (66) to a defined start value when the first trigger signal (Z_EQUAL) is generated.

8. The method of one of claims 1 to 7, **characterized in that** the machine part (12) carries out an action when the trigger signal (54) is generated, with a fault signal (56) being produced if the action does not take place or is unsuccessful.

9. The method of claim 8, **characterized in that** the current number of position pulses is stored in a fault memory (Latch Y*-2) when the fault signal (56) occurs.

10. An apparatus for position-accurate triggering of a machine part (12) which can be selectively activated and which is configured to process a workpiece (22), in particular it includes a laser, and which can be moved along at least one axis of movement (18) relative to the workpiece (22), in order to allow position-accurate processing of the workpiece (22) at processing positions spaced one from another, the apparatus comprising
- an incremental encoder (28) which generates a first pulse train (30) having a rising number of position pulses (32) as the machine part (12) moves along the axis of movement (18), with the number of position pulses (32) representing a movement position of the machine part (12),
- a memory (86) for storing a first number of pulses which represents a desired trigger position of the machine part,
- a counter (Counter Y*) for counting the position pulses (32) during movement of the machine part (12) in order to determine a current number of position pulses,
- a comparator (88) for comparing the current number of position pulses and the first number of pulses, and
- a signal generator (90; 94) for generating a first trigger signal (54; Z_EQUAL) in order to trigger the machine part (12) when the current number of position pulses corresponds to the first number of pulses,
**characterized by** a drive control circuit having a drive (14) for moving the machine part (12) and having a closed loop controller (46) including a control algorithm, which controller operates the drive (14) and receives the current number of position pulses as the actual position of the machine part (12), wherein the drive control circuit reads the current number of position pulses cyclically with a cycle time (44) which is greater than a time interval (d) between two adjacent position pulses (32), and wherein the first trigger signal (54; Z_EQUAL) for the machine part (12) is directly generated from the pulse train (30), bypassing the control algorithm (46).

11. The apparatus of claim 10, further comprising a programmable computer unit (36) having an interface card (48) for connecting the incremental encoder (28), and having a central processor (38), wherein the closed loop controller (46) is implemented in the form of a controller program which is run cyclically by the central processor (38), and wherein at least the comparator (88) and the signal generator (90; 94) are arranged on the interface card (48).

## Revendications

1. Procédé pour le déclenchement vers une position précise d'un élément de machine (12) sélectivement activable, réalisé pour usiner une pièce (22), contenant notamment un laser, et déplacé par rapport à la pièce (22) le long d'au moins un axe de déplacement (18) pour permettre un usinage avec précision de position de la pièce (22) sur des positions d'usinage espacées entre elles, comportant les étapes suivantes :
- préparation d'un transmetteur incrémentiel (28) générant une première séquence d'impulsions (30) avec un nombre croissant d'impulsions locales (32) lors du déplacement de l'élément de machine (12) le long de l'axe de déplacement (18), le nombre des impulsions locales (32) représentant une position de déplacement de l'élément de machine (12),
- définition (66 ; 100) d'un premier nombre d'impulsions représentant une position de déclenchement souhaitée pour l'élément de machine (12),
- comptage (70 ; 104) des impulsions locales lors du déplacement de l'élément de machine (12), afin de déterminer un nombre actuel d'impulsions locales,
- comparaison (77 ; 106) du nombre actuel d'impulsions locales avec un premier nombre d'impulsions, et
- production (74 ; 110) d'un premier signal de déclenchement (54 ; Z_GLEICH) pour le déclenchement de l'élément de machine (12) si le nombre actuel d'impulsions locales correspond au premier nombre d'impulsions,
**caractérisé en ce que** l'élément de machine (12) est déplacé au moyen d'un circuit régulateur d'entraînement (14, 28, 38, 44, 46) avec un algorithme de régulation (46), ledit circuit régulateur d'entraînement (14, 28, 38, 44, 46) recevant le nombre actuel d'impulsions locales afin de déterminer une position effective de l'élément de machine (12), ledit circuit régulateur d'entraînement mémorisant cycliquement le nombre actuel d'impulsions locales avec un temps de cycle (44) supérieur à un intervalle temporel (d) entre deux impulsions locales (32) contiguës, et le premier signal de déclenchement (54 ; Z_GLEICH) pour l'élément de machine (12) étant généré par contournement de l'algorithme de régulation (46), directement à partir de la séquence d'impulsions (30).

2. Procédé selon la revendication 1, **caractérisé en ce que** le nombre actuel d'impulsions locales et le premier nombre d'impulsions sont comparés entre eux pendant un laps de temps inférieur à un intervalle temporel (d) entre deux impulsions locales contiguës lors du déplacement de l'élément de machine (12).

3. Procédé selon la revendication 1 ou la revendication 2, **caractérisé en ce que** le premier signal de déclenchement (54 ; Z_GLEICH) est généré de manière répétée (82) en fonction du nombre actuel d'impulsions locales, jusqu'à ce que l'élément de machine (12) atteigne une position finale définie.

4. Procédé selon la revendication 1 ou la revendication 2, **caractérisé en ce que** le premier signal de déclenchement (Z_GLEICH) lance un générateur d'impulsions (94) qui génère un deuxième signal de déclenchement (96) avec un nombre d'impulsions temporelles successives, les impulsions temporelles déclenchant l'élément de machine (12).

5. Procédé selon l'une des revendications 1 à 4, **caractérisé en ce que** l'élément de machine (12) est déplacé à une vitesse constante au moins après génération du premier signal de déclenchement (54).

6. Procédé selon la revendication 5, **caractérisé en ce que** la vitesse constante est déterminée en fonction d'une fréquence de travail (64) de l'élément de machine (12).

7. Procédé selon l'une des revendications 1 à 6, **caractérisé en ce que** les impulsions locales (32) sont comptées par un compteur numérique (Counter Y*) dont une valeur initiale définie est fixée (66) à la génération du premier signal de déclenchement (Z_GLEICH).

8. Procédé selon l'une des revendications 1 à 7, **caractérisé en ce que** l'élément de machine (12) exécute une action à la génération du signal de déclenchement (54), un signal d'erreur (56) étant généré lorsque l'action est infructueuse ou en absence d'action.

9. Procédé selon la revendication 8, **caractérisé en ce que** le nombre actuel d'impulsions locales est mémorisé dans une mémoire d'erreurs (Latch Y*-2) lorsque le signal d'erreur (56) apparaît.

10. Dispositif pour le déclenchement vers une position précise d'un élément de machine (12) sélectivement activable, ledit élément de machine étant réalisé pour usiner une pièce (22), contenant notamment un laser, et pouvant être déplacé par rapport à une pièce (22) le long d'au moins un axe de déplacement (18) pour permettre un usinage avec précision de position de la pièce (22) sur des positions d'usinage espacées entre elles, avec :
- un transmetteur incrémentiel (28) générant une première séquence d'impulsions (30) avec un nombre croissant d'impulsions locales (32) lors du déplacement de l'élément de machine (12) le long de l'axe de déplacement (18), le nombre des impulsions locales (32) représentant une position de déplacement de l'élément de machine (12),
- une mémoire (86) pour la mémorisation d'un premier nombre d'impulsions représentant une position de déclenchement souhaitée pour l'élément de machine,
- un compteur (Counter Y*) pour le comptage des impulsions locales (32) lors du déplacement de l'élément de machine (12), afin de déterminer un nombre actuel d'impulsions locales,
- un comparateur (88) pour la comparaison du nombre actuel d'impulsions locales au premier nombre d'impulsions, et
- un générateur de signal (90 ; 94) pour la génération d'un premier signal de déclenchement (54 ; Z_GLEICH) pour le déclenchement de l'élément de machine (12) si le nombre actuel d'impulsions locales correspond au premier nombre d'impulsions,
**caractérisé par** un circuit régulateur d'entraînement avec un entraînement (14) pour le déplacement de l'élément de machine (12) et avec un régulateur (46) comprenant un algorithme de régulation qui commande l'entraînement (14) et reçoit le nombre actuel d'impulsions locales en tant que position effective de l'élément de machine (12), le circuit régulateur d'entraînement mémorisant cycliquement le nombre actuel d'impulsions locales avec un temps de cycle (44) supérieur à un intervalle temporel (d) entre deux impulsions locales (32) contiguës, et le premier signal de déclenchement (54 ; Z_GLEICH) pour l'élément de machine (12) étant généré par contournement de l'algorithme de régulation (46), directement à partir de la séquence d'impulsions (30).

11. Dispositif selon la revendication 10, comprenant en outre une unité de calcul programmable (36), laquelle contient une carte d'interface (48) pour le raccordement du transmetteur incrémentiel (28) et un processeur (38), le régulateur (46) étant réalisé comme programme de régulation cycliquement exécuté par le processeur (38), et au moins le comparateur (88) et le générateur de signal (90 ; 94) étant réalisés sur la carte d'interface (48).
